# EUROPÄISCHE PATENTSCHRIFT

(11) **EP 3 490 129 B1**
(45) Veröffentlichungstag und Bekanntmachung des Hinweises auf die Patenterteilung: **08.01.2020**
(21) Anmeldenummer: 17203987.7
(22) Anmeldetag: 28.11.2017
(51) Int. Cl.: H02M 1/32, H02M 1/36, H02M 3/07, H02M 7/06, H02J 7/00, H02H 7/16, H02H 9/00

(54) **ELEKTRONISCHE SCHUTZSCHALTUNG**
ELECTRONIC PROTECTION CIRCUIT
CIRCUIT PROTECTION ÉLECTRONIQUE

(43) Veröffentlichungstag der Anmeldung: 29.05.2019
(73) Patentinhaber: KEB Automation KG, 32683 Barntrup (DE)
(72) Erfinder: KORTHALS, Hans-Peter, 32699 Extertal (DE); HERTEL, Willi, 32657 Lemgo (DE)
(74) Vertreter: Rausch Wanischeck-Bergmann Brinkmann

(56) Entgegenhaltungen:
- EP-A2- 0 795 947
- EP-A2- 2 728 731
- CN-Y- 201 388 162
- DE-A1- 2 252 434
- DE-A1-102011 053 013
- JP-A- 2013 009 498
- US-A- 3 424 949
- US-A1- 2010 078 998

## Beschreibung

Die Erfindung betrifft einen Frequenzumrichter zum Betreiben einer elektrischen Maschine, mit einem Gleichrichter, der Thyristoren als Gleichrichterhalbleiter aufweist, und mit einem Wechselrichter, wobei der Gleichrichter und der Wechselrichter miteinander über einen Zwischenkreis verschaltet sind, wobei der Zwischenkreis zwei in Reihe geschaltet Zwischenkreiskondensatoreinheiten und je Zwischenkreiskondensatoreinheit einen hierzu parallel geschalteten Symmetriewiderstand zur Spannungssymmetrierung an den Zwischenkreiskondensatoreinheiten aufweist, sowie mit einer Vorladeschaltung für den Zwischenkreis, die eine Diode und einen hierzu in Reihe geschalteten Widerstand aufweist. Des Weiteren betrifft die Erfindung ein Verfahren zum Stromlosschalten eines Zwischenkreises eines solchen Frequenzumrichters.

Umrichter im Allgemeinen sowie Frequenzumrichter im Speziellen sind aus dem Stand der Technik an sich gut bekannt, weshalb es eines gesonderten druckschriftlichen Nachweises an dieser Stelle nicht bedarf. Es sei deshalb auch nur beispielhaft auf die EP 2 680 421 B1 verwiesen, die einen Frequenzumrichter mit Zwischenkreiskondensator sowie ein Verfahren zum Vorladen desselben betrifft.

Frequenzumrichter verfügen typischerweise über einen Gleichrichter und einen Wechselrichter, die mittels eines Zwischenkreises miteinander verschaltet sind. Gemäß einer vorbekannten Bauform verfügt der Zwischenkreis über zwei in Reihe geschaltete Zwischenkreiskondensatoreinheiten. Dabei können je Zwischenkreiskondensatoreinheit mehrere in Reihe und/oder parallel geschaltete Zwischenkreiskondensatoren vorgesehen sein.

Als Zwischenkreiskondensatoren eignen sich insbesondere Elektrolytkondensatoren. Bei Elektrolytkondensatoren handelt es sich um gepolte Kondensatoren, deren Anodenelektrode aus einem Metall wie zum Beispiel Aluminium, Tantal oder Niob besteht, auf dem eine äußerst dünne, elektrisch isolierende Schicht als Dielektrikum aufgebracht ist. Die Kathodenelektrode ist durch den Elektrolyten gebildet, der entweder in flüssiger Form als lonenleiter oder in fester Form als Elektronenleiter ausgebildet ist.

Kondensatoren befinden sich in nahezu jeder elektrischen Schaltung. Dabei bieten Elektrolytkondensatoren den großen Vorteil gegenüber anderen Kondensatortechnologien, dass sie hohe Kapazitätswerte bei kleinen Bauformen erreichen. Daher werden sie speziell in Anwendungen eingesetzt, bei denen Energie auf kleinem Bauraum zwischengespeichert werden soll. Eine mögliche Anwendung für einen Elektrolytkondensator ist als Glättungskondensator in einer Gleichrichterschaltung. Da die Spannungsfestigkeit von Elektrolytkondensatoren begrenzt ist, werden in 400 V-Anwendungen mehrere Elektrolytkondensatoren in Reihe geschaltet, um die notwendige Spannungsfestigkeit zu erreichen. Eine solche Ausführung findet sich zum Beispiel im Zwischenkreis von 400 V-Frequenzumrichtern.

Grundsätzlich besteht bei elektrischen Bauteilen immer die Gefahr, dass sie mit steigender Lebensdauer oder durch andere Einflüsse einen Defekt aufweisen und einen Kurzschluss bilden. Dies ist insbesondere bei der Reihenschaltung von Elektrolytkondensatoren problematisch. Denn sollte ein Kondensator in der Reihenschaltung einen Kurzschluss bilden, führt dies zu einem Spannungsanstieg an den nicht defekten Kondensatoren der Reihenschaltung. Steigt nun die Spannung an einem der nicht defekten Kondensatoren über einen kondensatorspezifischen Maximalwert, so hat dies die Zerstörung des Kondensators zur Folge, was im Falle eines Elektrolytkondensators zu einem explosionsartigen Bersten führen kann. Dabei wird die Berstkraft unter anderem von der Höhe der Überspannung, dem zur Verfügung stehenden Strom und/oder der Bauform und dem Zustand des Kondensators bestimmt.

Insbesondere bei 400 V-Frequenzumrichtern besteht die vorerläuterte Berstproblematik, da hier Elektrolytkondensatoren als Glättungskondensatoren verwendet werden, die einer Netzspannungsgleichrichterschaltung nachgeschaltet sind. Im kritischen Betriebsfall wird der Strom vom Versorgungsnetz in die Kondensatoren allein durch die Impedanzen des Versorgungsnetzes und der Gleichrichterschaltung eingestellt. Da diese Impedanzen in der Regel sehr gering sind, können sehr hohe Ströme entstehen, was zum gefährlichen Bersten der Elektrolytkondensatoren führen kann.

Um ausreichenden Personen- und Sachschutz bei der Verwendung von Elektrolytkondensatoren gewährleisten zu können, ist es eine übliche Maßnahme, die zugehörigen Geräte gehäuseseitig entsprechend zu verstärken. Es soll so sichergestellt werden, dass beim Bersten eines Elektrolytkondensators möglichst wenig Bestandteile aus dem Gehäuse austreten und nach außen gelangen können, so dass nach dem Bersten keine spannungsführenden Komponenten offenliegen. Derartige Gehäuseverstärkungen sind aber in nachteiliger Weise sehr aufwendig und damit teuer.

Eine weitere Schutzmaßnahme besteht in der Verwendung von flinken Sicherungen, die dem Gerät, beispielsweise dem Frequenzumrichter vorzuschalten sind. Diese Sicherungen unterbinden im Fehlerfall sehr schnell den Strom- und Energiefluss in das Gerät. Dadurch wird die Heftigkeit beim Bersten eines Elektrolytkondensators deutlich reduziert. Allerdings sind diese Sicherungen im Vergleich zu anderen Sicherungstypen vergleichsweise teuer.

Aus der WO 2004/010557 ist des Weiteren eine elektronische Schaltung zur Kurzschlussüberwachung einer von mindestens zwei in Reihe geschalteten Zwischenkreiskondensatoreinheiten bekannt. Mittels dieser vorbekannten Schaltung wird eine von der Zwischenkreisspannung abgeleitete Referenzspannung als Steuersignal verwendet, welches im Fall eines Kondensator-Kurzschlusses ein Fehlersignal generiert. Dabei ist die Referenzspannung durch eine Kette von in Reihe geschalteten Widerständen gebildet, die parallel zu den zu überwachenden Zwischenkreiskondensatoren geschaltet ist.

Aus dem Stand der Technik ist gemäß der DE 2 252 434 A1 ferner eine Anordnung zur Überwachung und zum Schutz von in Reihe geschalteten Kondensatoren bekannt. Diese Anordnung verfügt über Symmetriewiderstände, die zu den Kondensatoren parallel geschaltet sind. Dabei bilden die Symmetrierungswiderstände mit den Widerständen eines zur Reihenschaltung parallel geschalteten Spannungsteilers eine Brückenschaltung. In die Ausgangsdiagonale der Brückenschaltung ist eine Überwachungseinrichtung eingeschaltet und es ist zudem vorgesehen, dass parallel zu einem Brückenwiderstand ein spannungsbegrenzendes Bauelement geschaltet ist.

Aus der DE 10 2011 053 013 A1 ist eine Vorrichtung sowie ein Verfahren zur Symmetrierung der Spannungsaufteilung von in Reihe geschalteten Energiespeichern bekannt. Dabei ist vorrichtungsseitig vorgesehen, dass jedem der Energiespeicher eine Bypass-Schaltung zur Begrenzung der Spannung des Energiespeichers durch Umleitung des Stromflusses auf die Bypass-Schaltung zugeordnet ist. Jede Bypass-Schaltung weist einen Widerstand und ein ansteuerbares Schalterelement auf und ist zu dem zugehörigen Energiespeicher parallel angeschlossen.

Aus der CN 201 388 162 Y ist eine Vorladungssteuerschaltung für einen Wandler bekannt. Diese verfügt über ein siliziumgesteuertes Triggermodul, das die dreiphasige Eingangsspannung kontinuierlich abtastet und mit einem vorbestimmten Referenzwert vergleicht. Wenn der Abtastwert größer als der Referenzwert ist, wird ein Auslösesignal zur Reduzierung des Stromflusses durch die Vorladeschaltung erzeugt.

Die JP 2013 009 498 A betrifft eine Energiespeichervorrichtung, die ein Energiespeichermodul, eine Ausgleichsschaltung, eine Überwachungsschaltung und eine Ausgangsschaltung aufweist. Die Ausgangsschaltung verfügt ihrerseits über eine Verbrauchsstromeinstellschaltung, die dazu dient, einen Verbrauchsstrom derselben auf einen vorbestimmten Stromwert einstellen zu können.

Die vorbekannten Schutzmaßnahmen haben sich im alltäglichen Praxiseinsatz zwar bewährt, doch es besteht nach wie vor ein Bedürfnis daran, einen effektiven Personen- und Sachschutz bei der Verwendung von Elektrolytkondensatoren bereitzustellen, der systembedingt eine einfache und zugleich auch preisgünstige Umsetzung gestattet. Es ist deshalb die der Erfindung zu Grunde liegende **Aufgabe,** einen insoweit verbesserten Personen- und Sachschutz bei der Verwendung von Elektrolytkondensatoren bereitzustellen.

Zur **Lösung** dieser Aufgabe wird mit der Erfindung gemäß Anspruch 1 vorgeschlagen ein Frequenzumrichter der vorgenannten Art, der sich dadurch auszeichnet, dass je Zwischenkreiskondensatoreinheit eine Einheit zur Erfassung der an dieser Zwischenkreiskondensatoreinheit anliegenden Spannung vorgesehen ist, wobei die Einheit einen Optokoppler aufweist, der mit dem Symmetriewiderstand der zugehörigen Zwischenkreiskondensatoreinheit in Reihe geschaltet ist, dass eine Vergleichseinrichtung vorgesehen ist, die die an den Zwischenkreiskondensatoreinheiten anliegenden Spannungen durch Erkennen eines Umschaltens eines Optokopplerausgangs miteinander vergleicht und bei Spannungsasymmetrie ein entsprechendes Steuersignal abgibt, und dass eine Abschaltvorrichtung vorgesehen ist, die bei Detektion eines von der Vergleichseinrichtung abgegebenen Steuersignals den Stromfluss in den Zwischenkreis unterbricht, wobei die Abschaltvorrichtung den Gleichrichter, die Vorladeschaltung für den Zwischenkreis und eine Thyristorensteuerung zur Deaktivierung eines die Thyristoren des Gleichrichters ansteuernden Signals aufweist, und wobei der Widerstand der Vorladeschaltung ein temperaturabhängiger Widerstand ist.

Die erfindungsgemäße Ausgestaltung sorgt dafür, dass es im Kurzschlussfall zu einer sofortigen Unterbrechung des Stromflusses in den Zwischenkreis kommt. Ein Bersten der betroffenen Zwischenkreiskondensatoreinheit wird so verhindert, womit ein effektiver Personen- und Sachschutz realisiert ist.

Die erfindungsgemäße Schutzschaltung besteht dem Grunde nach aus zwei Komponenten. Mittels der ersten Schaltungskomponente erfolgt eine Spannungsmessung an den Zwischenkreiskondensatoreinheiten. Fällt eine der beiden Zwischenkreiskondensatoreinheiten wegen eines Kurzschlusses aus, so erhöht sich die an der nicht defekten, das heißt der anderen Kondensatoreinheit anliegende Spannung, was als Überspannungsfall erkannt wird. Die zweite Schaltungskomponente dient im Überlastfall dazu, den Strom- und Energiefluss in den Zwischenkreiskondensator zu unterbinden. Damit wird eine Bestromung des Zwischenkreises bis zum Bersten der noch nicht defekten Zwischenkreiskondensatoreinheit unterbunden.

Zwecks Erkennung eines Überlastfalls ist eine Vergleichseinrichtung vorgesehen, die die an den Zwischenkreiskondensatoreinheiten anliegenden Spannungen miteinander vergleicht. Dabei ist je Zwischenkreiskondensatoreinheit ein zu dieser Zwischenkreiskondensatoreinheit parallel geschalteter Symmetriewiderstand vorgesehen, die der Spannungssymmetrierung an den Zwischenkreiskondensatoreinheiten dienen. Wird nun mittels der Vergleichseinrichtung eine Spannungsasymmetrie festgestellt, so bedeutet dies ein Anliegen einer zu hohen Spannung an einer der beiden Zwischenkreiskondensatoreinheiten. Die Vergleichseinrichtung gibt deshalb ein entsprechendes Steuersignal ab, das eine Abschaltvorrichtung zur Stromunterbrechung als Eingangssignal dient.

Zur Spannungserfassung ist je Zwischenkreiskondensatoreinheit eine Einheit zur Erfassung der an dieser Zwischenkreiskondensatoreinheit anliegenden Spannung vorgesehen. Die von diesen Erfassungseinheiten abgegebenen Signale werden von der Vergleichseinrichtung miteinander verglichen. Solange Spannungssymmetrie herrscht, sind die beiden Zwischenkreiskondensatoreinheiten in Takt. Der Ausfall einer der beiden Einheiten führt zu einer sofortigen Spannungsasymmetrie, die mittels der Vergleichseinrichtung durch Spannungsvergleich erkannt wird.

Bei festgestellter Spannungsasymmetrie erfolgt mittels der erfindungsgemäßen Schutzschaltung eine Unterbrechung des Stromflusses in den Zwischenkreis. Hierzu dient die Abschaltvorrichtung der Schutzschaltung, die in kommunikationstechnischer Verbindung mit der Vergleichseinrichtung steht. Denn bei Detektion eines von der Vergleichseinrichtung abgegebenen Steuersignals unterbindet die Abschaltvorrichtung den Strom- und Energiefluss in den Zwischenkreis und damit auch in die noch intakte Zwischenkreiskondensatoreinheit, die damit vor einem ungewollten Bersten infolge einer Überspannung geschützt ist.

Insgesamt ist so eine einfach zu realisierende Schutzschaltung geschaffen, die in effektiver Weise einem Personen- und Sachschutz dient, da sie im Überspannungsfall einen sofortigen Stromfluss unterbricht, was ein Bersten einer Zwischenkreiskondensatoreinheit wirkungsvoll verhindert. Dabei kann eine Zwischenkreiskondensatoreinheit aus mehreren Elektrolytkondensatoren gebildet sein, die parallel und/oder in Reihe geschaltet sind.

Verfahrensseitig wird mit der Erfindung des Weiteren vorgeschlagen ein Verfahren zum Stromlosschalten eines Zwischenkreises eines Frequenzumrichters der vorbeschriebenen Art im Kurzschlussfall einer von zwei in Reihe geschalteten Zwischenkreiskondensatoreinheiten des Zwischenkreises, bei dem eine Spannungssymmetrierung an den Zwischenkreiskondensatoreinheiten erfolgt, bei dem die an den Zwischenkreiskondensatoreinheiten jeweils anliegende Spannung erfasst wird, bei dem die an den Zwischenkreiskondensatoreinheiten anliegenden Spannungen mit Hilfe von Optokopplern miteinander verglichen werden, und bei dem im Falle des Vorliegens einer durch die Vergleichsprüfung erkannten Spannungsasymmetrie der Stromfluss in den Zwischenkreis unterbrochen wird, wobei der Strom über Thyristoren in den Zwischenkreis fließt und der Stromfluss in den Zwischenkreis durch Sperrung der Thyristoren unterbrochen wird, wobei der Strom bei gesperrten Thyristoren über eine Vorladeschaltung mit temperaturabhängigem Widerstand in den Zwischenkreis fließt und der Stromfluss in den Zwischenkreis infolge des Hochohmigwerdens des temperaturabhängigen Widerstandes unterbrochen wird.

Die erfindungsgemäße Verfahrensdurchführung erbringt die schon vorstehend anhand der erfindungsgemäßen Schutzschaltung erläuterten Vorteile.

Vorrichtungsseitig ist erfindungsgemäß des Weiteren vorgesehen, dass eine Einheit zur Spannungserfassung einen Optokoppler aufweist, der mit dem Symmetriewiderstand der zugehörigen Zwischenkreiskondensatoreinheit in Reihe geschaltet ist. Demgemäß ist also vorgesehen, dass in den Symmetriekreis je Zwischenkreiskondensatoreinheit ein Optokoppler geschaltet ist, und zwar in Reihe zum Symmetriewiderstand der jeweils zugehörigen Zwischenkreiskondensatoreinheit.

Im Ergebnis dieser Schaltung ist erreicht, dass im bestimmungsgemäßen Verwendungsfall ein Strom durch die Dioden der Optokoppler fließt, der das Schalten, das heißt je nach Logik das Einschalten oder das Ausschalten der Optokopplerausgänge zur Folge hat. Die Optokopplerausgänge stehen in kommunikationstechnischer Verbindung mit der Vergleichseinrichtung, so dass mittels dieser feststellbar ist, ob sich die an den Zwischenkreiskondensatoreinheiten jeweils anliegenden Spannungen im spezifizierten Bereich befinden.

Bildet sich an einer der Zwischenkreiskondensatoreinheiten ein Kurzschluss aus, so führt dies zu einer unzulässigen und zerstörenden Spannungserhöhung an den verbleibenden Zwischenkreiskondensatoreinheiten. Durch den Optokoppler, der der durch Kurzschluss ausgefallenen Zwischenkreiskondensatoreinheit parallel geschaltet ist, fließt infolge des Kurzschlusses kein Strom mehr, was dazu führt, dass der Optokopplerausgang umschaltet und sich das Spannungssignal am Eingang der Vergleichseinrichtung ändert. Die Vergleichseinrichtung erkennt mithin den Wechsel in der Spannungsverteilung und damit indirekt, dass sich die Spannungen an den Kondensatoreinheiten nicht mehr im spezifizierten Arbeitsbereich befinden. Die Vergleichsschaltung gibt alsdann aufgrund dieser erkannten Spannungsasymmetrie ein entsprechendes Steuersignal ab, das dann im Weiteren zur sofortigen Unterbrechung des Stromflusses in den Zwischenkreis dient.

Von besonderem Vorteil der vorerläuterten Ausgestaltung ist die einfache Spannungserfassung an den Zwischenkreiskondensatoreinheiten. Diese erfolgt nicht direkt, sondern indirekt über den sich einstellenden Strom im Symmetriekreis und lässt sich durch einen minimalen Bauteileinsatz realisieren. Dabei geschieht die Erfassung allein durch Optokoppler, so dass keine zusätzlichen kostenintensiven Messbausteine benötigt werden, die unter Umständen eine eigene Spannungsversorgung erfordern.

Die Abschaltungsvorrichtung weist erfindungsgemäß einen Gleichrichter und eine Vorladeschaltung für den Zwischenkreis auf. Dabei ist der Gleichrichter dem Zwischenkreis vorgeschaltet und verfügt bevorzugterweise über Thyristoren als Gleichrichterhalbleiter. Die Vorladeschaltung ist parallel zum Thyristor an Phase L1 geschaltet und weist eine Diode und einen hierzu in Reihe geschalteten, temperaturabhängigen Widerstand auf.

Im bestimmungsgemäßen Anwendungsfall führt der Energiefluss vom Versorgungsnetz über den Gleichrichter in den Zwischenkreis und von dort aus zu weiteren Verbrauchern. Die Thyristoren des Gleichrichters sind in diesem Fall angesteuert, um den Energiefluss über die Gleichrichterschaltung in den Zwischenkreis zu ermöglichen.

Parallel zum ersten Thyristor, der an Phase L1 des Versorgungsnetzes angeschlossen ist, ist der Vorladezweig der Vorladeschaltung geschaltet. Dabei übernehmen die Diode und der hierzu in Reihe geschaltete Widerstand der Vorladeschaltung bei einer Einschaltung die Spannungsvorladung des Zwischenkreises. Bei hinreichender Spannungshöhe im Zwischenkreis werden die Thyristoren eingeschaltet. Dabei ist es Sinn und Zweck der Vorladeschaltung, größere Ströme im Versorgungsnetz beim Einschalten zu verhindern.

Wird nun in schon vorbeschriebener Weise durch Spannungserfassung indirekt festgestellt, dass an einer der Zwischenkreiskondensatoreinheiten ein Kurzschluss vorliegt, erfolgt eine Abschaltung der Thyristoren des zur Abschaltvorrichtung gehörenden Gleichrichters. Die Abschaltvorrichtung verfügt zu diesem Zweck über eine Thyristorensteuerung, das heißt über Mittel zur Deaktivierung eines die Thyristoren ansteuernden Signals. Sobald die drei an die jeweiligen Phasen angeschlossenen Thyristoren gesperrt sind, ist der Stromfluss über den Gleichrichter in den Zwischenkreis unterbunden. Es stellt sich dann ein Stromfluss über die Vorladeschaltung, das heißt über die Diode und den hierzu in Reihe geschalteten Widerstand der Vorladeschaltung ein.

Bei dem Widerstand der Vorladeschaltung handelt es sich um einen temperaturabhängigen Widerstand, der mit zunehmend werdendem Stromfluss hochohmig wird, was im vorbeschriebenen Fehlerfall des Kurzschlusses einer Zwischenkreiskondensatoreinheit der Fall ist. Sobald der Widerstand infolge eines hohen Stromflusses hochohmig geworden ist, ist der Zwischenkreis vom Versorgungsnetz getrennt. Es kann somit kein Energiefluss sowohl über die Thyristoren als auch über die Vorladeschaltung in den Zwischenkreis erfolgen, womit die Zwischenkreiskondensatoreinheiten vor einer weiteren Zerstörung geschützt sind. Der temperaturabhängige Widerstand der Vorladeschaltung ist mithin so auszulegen, dass eine Stromflussunterbindung in den Zwischenkreis stattfindet, bevor es zu einem explosionsartigen Bersten einer der Zwischenkreiskondensatoreinheiten kommen kann.

Von besonderem Vorteil der vorbeschriebenen Abschaltvorrichtung ist, dass sie die ohnehin für eine bestimmungsgemäße Vorladung des Zwischenkreises vorgesehene Vorladeschaltung nutzt, um im Fehlerfall, das heißt im Falle eines Kurzschlusses einer Zwischenkreiskondensatoreinheit eine sofortige Trennung des Zwischenkreises vom Versorgungsnetz zu bewerkstelligen. Damit kommt der Vorladeschaltung im Fehlerfall eine Schutzfunktion zu. Dabei ist in diesem Zusammenhang ferner von Vorteil, dass der temperaturabhängige Widerstand der Vorladeschaltung im hochohmigen Zustand ein erneutes, unbeabsichtigtes Einschalten bei einem bestehenden Fehlerfall verhindert, was zusätzliche Sicherheit für den Anwender schafft.

Verfahrensseitig wird in diesem Zusammenhang vorgeschlagen, dass der Strom über Thyristoren in den Zwischenkreis fließt, wobei der Stromfluss in den Zwischenkreis durch Sperrung der Thyristoren unterbunden wird. Ferner wird vorgeschlagen, dass der Strom bei gesperrten Thyristoren über eine Vorladeschaltung mit temperaturabhängigem Widerstand in den Zwischenkreis fließt, wobei der Stromfluss in den Zwischenkreis infolge des Hochohmigwerdens des temperaturabhängigen Widerstands unterbunden wird.

Aus dieser Verfahrensdurchführung ergeben sich die schon anhand der erfindungsgemäßen Schutzschaltung erläuterten Vorteile.

Gemäß der erfindungsgemäßen Ausgestaltung können der ohnehin vorgesehene Gleichrichter des Frequenzumrichters und die ebenfalls ohnehin vorgesehene Vorladeschaltung des Frequenzumrichters als Schaltungskomponenten der erfindungsgemäß vorgesehenen Abschaltvorrichtung genutzt werden. Dies macht die erfindungsgemäße Ausgestaltung besonders einfach und betriebswirtschaftlich in der Umsetzung, und dies bei gleichzeitig verbessertem Personen- und Sachschutz. Denn die erfindungsgemäß vorgesehene Schaltung stellt im Fehlerfall, das heißt insbesondere im Kurzschlussfall einer Zwischenkreiskondensatoreinheit eine sofortige Trennung des Zwischenkreises vom Versorgungsnetz sicher. Ein explosionsartiges Bersten einer Zwischenkreiskondensatoreinheit kann so wirkungsvoll verhindert werden.

Die erfindungsgemäße Ausgestaltung eignet sich aber nicht nur für die Verwendung in Frequenzumrichtern. Weitere Anwendungsbeispiele sind die Verwendung in Rückspeiseeinheiten, in aktiven Oberschwingungsfiltern, in USV-Anlagen, in einem Active Front End oder in einem Active Infeed Converter.

Weitere Merkmale und Vorteile der Erfindung ergeben sich aus der Beschreibung anhand der Figuren. Dabei zeigen
- Fig. 1: eine prinzipielle Spannungserfassung nach der Erfindung;
- Fig. 2: eine prinzipielle Gleichrichterschaltung und
- Fig. 3: ein Blockschaltbild eines Frequenzumrichters.

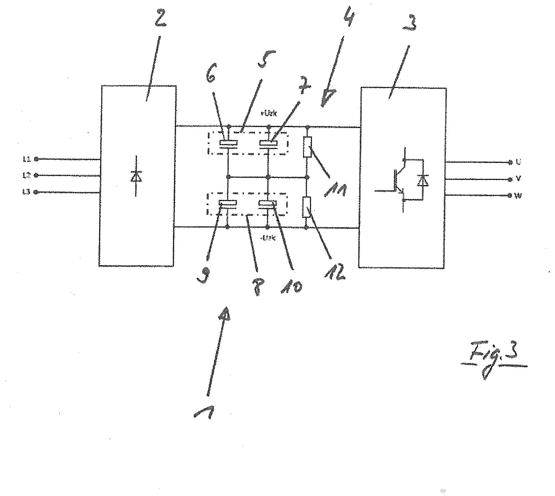

Figur 3 lässt in einem Blockschaltbild einen Frequenzumrichter 1 erkennen. Dieser dient zum Betreiben einer in den Figuren nicht näher dargestellten elektrischen Maschine, beispielsweise eines Motors, und verfügt in an sich bekannter Weise über einen Gleichrichter 2 und einen Wechselrichter 3. Dabei sind der Gleichrichter 2 und der Wechselrichter 3 miteinander über einen Zwischenkreis 4 verschaltet.

Wie Figur 3 des Weiteren erkennen lässt, ist der Frequenzumrichter 1 stromeingangsseitig an die Phasen L1, L2 und L3 eines Versorgungsnetzes angeschlossen.

Der Zwischenkreis 4 des Frequenzumrichters 1 verfügt über zwei Zwischenkreiskondensatoreinheiten 5 und 8, die in Reihe geschaltet sind. Dabei verfügt im gezeigten Ausführungsbeispiel jede Zwischenkreiskondensatoreinheit 5 beziehungsweise 8 über zwei parallel geschaltete Kondensatoren 6 und 7 beziehungsweise 9 und 10. Im Ergebnis sind zwei Kondensatorpfade gegeben, wobei die Kondensatoren 6 und 9 sowie die Kondensatoren 7 und 10 in Reihe geschaltet sind.

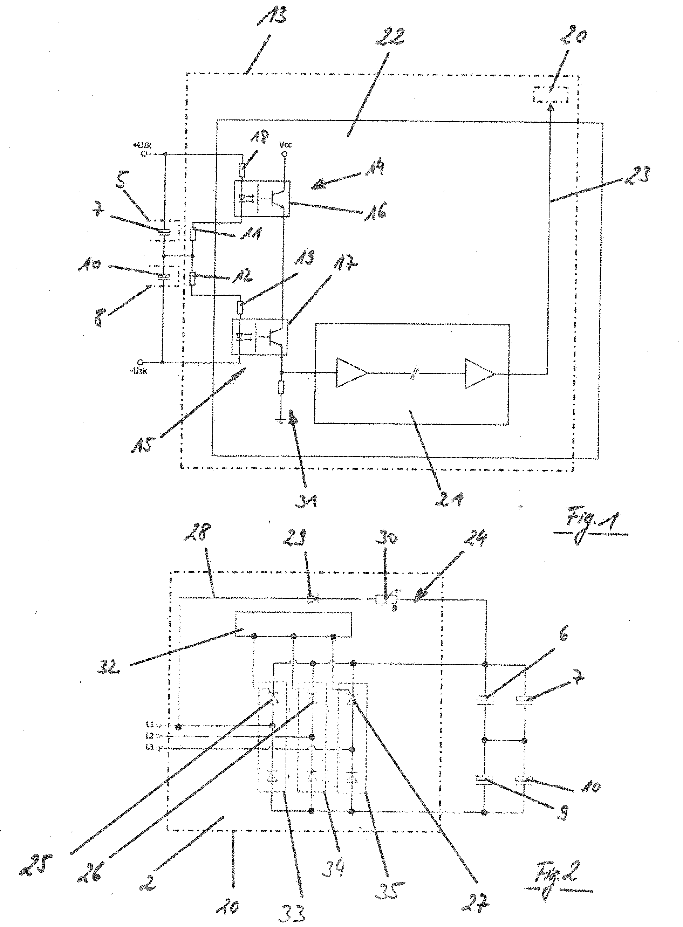

Bei den Kondensatoren 6, 7, 9 und 10 handelt es sich jeweils um Elektrolytkondensatoren, die im Überspannungsfall explosionsartig bersten können. Ein solches Bersten wird mit der erfindungsgemäßen Schutzschaltung 13 verhindert, wie sich dies aus der weiteren Beschreibung insbesondere anhand der Figuren 1 und 2 ergibt.

Die Schutzschaltung 13 verfügt je Zwischenkreiskondensatoreinheit 5 beziehungsweise 8 über einen Symmetriewiderstand 11 beziehungsweise 12, der zur zugehörigen Zwischenkreiskondensatoreinheit 5 beziehungsweise 8 parallel geschaltet ist. Demnach ist der Zwischenkreiskondensatoreinheit 5 der Symmetriewiderstand 11 und der Zwischenkreiskondensatoreinheit 8 der Symmetriewiderstand 12 zugeordnet, wie dies insbesondere die Darstellung nach Figur 1 erkennen lässt. Dabei dienen die Symmetriewiderstände 11 und 12 der Spannungssymmetrierung an den Zwischenkreiskondensatoreinheiten 5 und 8.

Je Zwischenkreiskondensatoreinheit 5 beziehungsweise 8 ist des Weiteren eine Einheit 14 beziehungsweise 15 zur Erfassung der an dieser Zwischenkreiskondensatoreinheit 5 beziehungsweise 8 anliegenden Spannung vorgesehen. Dabei verfügt jede Erfassungseinheit 14 beziehungsweise 15 über einen Optokoppler 16 beziehungsweise 17 und einen Widerstand 18 beziehungsweise 19, die jeweils in Reihe mit dem Symmetriewiderstand 11 beziehungsweise 12 der zugehörigen Zwischenkreiskondensatoreinheit 5 beziehungsweise 8 geschaltet sind. Demnach ist der Zwischenkreiskondensatoreinheit 5 die Erfassungseinheit 14 zugeordnet, die in Reihe mit dem Symmetriewiderstand 11 geschaltet ist. Die Erfassungseinheit 15 ist der Zwischenkreiskondensatoreinheit 8 zugeordnet und dementsprechend mit dem Symmetriewiderstand 12 in Reihe geschaltet. Dieser Sachzusammenhang ergibt sich ebenfalls aus Figur 1.

Die Schutzschaltung 13 verfügt des Weiteren über eine Vergleichseinrichtung 31. Mittels dieser werden im Betriebsfall die an den Zwischenkreiskondensatoreinheiten 5 und 8 anliegenden Spannungen miteinander verglichen, wobei die Vergleichseinrichtung 31 im Falle einer festgestellten Spannungsasymmetrie mittels einer Signalverarbeitung 21 ein Steuersignal erzeugt, das in Entsprechung des Pfeils 23 eine Abschaltvorrichtung zur sofortigen Unterbrechung des Stromflusses in den Zwischenkreis 4 aktiviert. Die vorbeschriebenen Schaltungskomponenten sind im gezeigten Ausführungsbeispiel schaltungstechnisch auf einer gemeinsamen Karte 22 realisiert.

Die Abschaltvorrichtung 20 ist im Detail in Figur 2 dargestellt. Diese umfasst den schon vorbeschriebenen Gleichrichter 2, eine Thyristoransteuerung 32 sowie eine Vorladeschaltung 24.

Der Gleichrichter 2 verfügt über drei Thyristoren 25, 26 und 27, die an die Phasen des Versorgungsnetzes angeschlossen sind. Dabei ist ein erster Thyristor 25 der Phase L1, ein zweiter Thyristor 26 der Phase L2 und ein dritter Thyristor 27 der Phase L3 zugeordnet. Die Thyristoren 25, 26 und 27 sind jeweils Teil einer Thyristoreinheit 33, 34 und 35, die auch noch weitere Baukomponenten, insbesondere Dioden aufweisen können.

Wie sich ebenfalls aus der Darstellung nach Figur 2 ergibt, ist die Vorladeschaltung 24 parallel zum ersten Thyristor 25 an Phase L1 des Versorgungsnetzes angeschlossen. Dabei besteht die Vorladeschaltung aus einer Reihenschaltung aus einer Diode 29 und einem temperaturabhängigen Widerstand 30, der bei hohen Temperaturen hochohmig wird. Anstelle nur eines Widerstandes können auch mehrere in Reihe und/oder parallel geschaltete Widerstände vorgesehen sein.

Die Funktionsweise der Schutzschaltung 13 ist die Folgende:
Im bestimmungsgemäßen Betriebsfall sind die Thyristoren 25, 26 und 27 über die Thyristoransteuerung 32 angesteuert, was einen Energie-, das heißt Stromfluss vom Versorgungsnetz über den Gleichrichter 2 in den Zwischenkreis 4 gestattet. Dabei haben bei voller Ansteuerung der Thyristoren 25, 26 und 27 die Diode 29 und der Widerstand 30 der Vorladeschaltung 24 eine vernachlässigbare Wirkung, da die Vorladeschaltung 24 parallel zum ersten Thyristor 25 geschaltet ist. Alternativ kann natürlich auch eine Parallelschaltung zum zweiten Thyristor 26 oder zum dritten Thyristor 27 vorgesehen sein.

Die Vorladeschaltung 24 übernimmt beim Einschalten des Frequenzumrichters 1 die Spannungs-Vorladung des Zwischenkreises 4. Erst bei hinreichender Spannungshöhe im Zwischenkreis 4 werden mittels der Thyristoransteuerung 32 die Thyristoren 25, 26 und 27 eingeschaltet. Durch eine solche Vorladung werden große Ströme im Versorgungsnetz beim Einschalten des Frequenzumrichters 1 verhindert.

Die im bestimmungsgemäßen Betriebsfall an den Zwischenkreiskondensatoreinheiten 5 und 8 anliegenden Spannungen werden mittels der zugehörigen Erfassungseinheit in 14 und 15 erfasst. Im spezifizierten Arbeitsbereich fließt ein Strom durch die Dioden der Optokoppler 16 und 17, der ein Schalten, das heißt ein Einschalten oder ein Ausschalten der zugehörigen Optokopplerausgänge bewirkt. Über die Signalverarbeitung 21 der Vergleichseinrichtung 31 wird einer übergeordneten Steuerung so mitgeteilt, dass sich die Spannungen an den Zwischenkreiskondensatoreinheiten 5 und 8 im spezifizierten Bereich befinden.

Sollte es nun an einer der beiden Zwischenkreiskondensatoreinheiten 5 oder 8 zu einem Kurzschluss kommen, so führt dies zu einer unzulässigen und zerstörenden Spannungsverdopplung an der anderen Zwischenkreiskondensatoreinheit 5 beziehungsweise 8. Der Stromfluss in dem Optokoppler 16 beziehungsweise 17, der der kurzschlussbehafteten Zwischenkreiskondensatoreinheit 5 beziehungsweise 8 zugeordnet ist, wird infolge dessen unterbunden. Damit schaltet der zugehörige Optokopplerausgang um und das Spannungssignal am Eingang der Signalverarbeitung 21 ändert sich. Diese erkennt den Wechsel und teilt der übergeordneten Steuerung und damit auch der Abschaltvorrichtung 20 in Entsprechung des Pfeils 23 mit, dass sich die Spannungen an den Kondensatoreinheiten 5 und 8 nicht mehr im bestimmungsgemäßen Bereich befinden. Die Abschaltvorrichtung 20 deaktiviert daraufhin den Gleichrichter 2, um weiteren Energiefluss in den Frequenzumrichter 1 zu verhindern. Es kann dabei in vorteilhafter Weise auf eine Steuerung verzichtet werden, da die Signalverarbeitung direkt auf die Ansteuerung des Gleichrichters 2 zugreift.

Die Signalübertragung an die Abschaltvorrichtung 20 bewirkt eine Abschaltung der Thyristoren 25, 26 und 27 über die Thyristor-Ansteuerung 32. Sobald alle drei Thyristoren 25, 26 und 27 sperren, wird sich ein Stromfluss über den Vorladezweig 28 der Vorladeschaltung 24, mithin über die Diode 29 und den Widerstand 30 einstellen. Da der Widerstand 30 ein PTC-Glied ist, wird dieser bei großem Stromfluss hochohmig, welcher große Stromfluss im Fehlerfall eines Kurzschlusses einer Zwischenkreiskondensatoreinheit gegeben ist.

Sobald der Widerstand 30 hochohmig geworden ist, ist der Zwischenkreis 4 vom Versorgungsnetz getrennt. Es findet somit kein Energiefluss statt, weder über die Thyristoren 25, 26 und 27, noch über die Vorladeschaltung 24 in den Zwischenkreis 4. Die Zwischenkreiskondensatoreinheiten 5 und 8 sind so vor einer weiteren Zerstörung geschützt.

Infolge eines Kurzschlusses an einer der beiden in Reihe geschalteten Zwischenkreiskondensatoreinheiten 5 beziehungsweise 8 liegt an der anderen Zwischenkreiskondensatoreinheit 5 beziehungsweise 8 die volle Zwischenkreisspannung an. Dieser Spannungswert übersteigt im Normalfall die Spannungsfestigkeit der Zwischenkreiskondensatoreinheit 5 beziehungsweise 8. Dabei verfügt eine solche Zwischenkreiskondensatoreinheit 5 beziehungsweise 8 typischerweise über einen Elektrolytkondensator, in dessen Inneren im Fehlerfall folgender Prozess abläuft.

Durch die zu hohe Spannung kommt es zur Funkenbildung an den schwächsten Stellen der Anodenfolie und zu einem erhöhten Leckstrom im Kondensator. Hierdurch entsteht mehr Verlustleistung im Kondensator und es kommt zur Gasbildung im Inneren. Dies hat eine Temperaturerhöhung im Inneren des Elektrolytkondensators zur Folge. Infolge einer solchen Temperaturerhöhung verringert sich die Durchschlagfeldstärke des Elektrolyts, wodurch es zur Funkenbildung im gesamten Kondensatorwickel kommt. Diese Funkenbildung hat eine erhöhte Gasbildung zur Folge, was zu einer Druckerhöhung im Inneren des Kondensators führt. Im Ergebnis haben die Kombination aus Funkenbildung, Temperaturerhöhung, Gasbildung und erhöhtem Druck ein explosionsartiges Bersten des Kondensators zur Folge.

Vorbekannte Elektrolytkondensatoren verfügen typischerweise über ein Ventil, das eine Möglichkeit bietet, im Inneren entstehendes Gas nach außen abzuleiten, um den mechanischen Druck zu verringern. Dieses Ventil ist aber im Fehlerfall des Kurzschlusses eines Kondensators wirkungslos, da es viel zu träge ist. Denn vorbekannte Ventile sind dafür ausgelegt, entstehendes Gas im Überlastfall, und nicht im Kurzschlussfall abzuleiten. So kann ein Überlastfall mehrere Minuten andauern, bevor der Elektrolytkondensator zerstört wird beziehungsweise das Ventil auslöst. Im Kurzschlussfall wird ein Kondensator nach bereits wenigen Millisekunden zerstört, womit eine Ventilauslösung kein wirkungsvoller Schutzmechanismus im Kurzschlussfall darstellt.

Untersuche der Anmelderin haben gezeigt, dass die Zeitspanne zwischen auftretendem Kurzschluss an einer der beiden Zwischenkreiskondensatoreinheiten und einem Bersten der anderen Zwischenkreiskondensatoreinheit je nach Bauform der eingesetzten Kondensatoren ca. 30 ms in Anspruch nimmt. Bei kleineren Kondensatorbauformen kann diese Zeitspanne auch unter 30 ms betragen.

Die Schutzschaltung 13 hat eine Reaktionszeit von 3 ms bis 15 ms, vorzugsweise von 4 ms bis 12 ms, noch mehr bevorzugt von 5 ms bis 10 ms, beispielsweise von ca. 6 ms, das heißt die Zeitspanne zwischen der Entstehung eines Kurzschlusses an einer der beiden Zwischenkreiskondensatoreinheiten 5 beziehungsweise 8 und der Unterbindung eines Stromflusses in den Zwischenkreis 4 beträgt ca. 6 ms. Diese Reaktionszeit ergibt sich daraus, dass die Thyristoren 25, 26 und 27 erst nach einem Stromnulldurchgang sperrend werden. Bei einem 50 Hz-Netz ergibt sich so eine Reaktionszeit von t = 1/(50 Hz x 3) = 6,67 ms. Es sind mithin in Abhängigkeit der gesamten Schaltungsanordnung solche Zwischenkreiskondensatoren 5 beziehungsweise 8 zu wählen, die im Überspannungsfall mindestens beispielsweise 10 ms diesen Zustand aushalten ohne zerstört zu werden. Inklusive Sicherheitstoleranz ist so sichergestellt, dass im Kurzschlussfall ein so schnelles Abschalten erfolgt, dass insbesondere ein ungewolltes explosionsartiges Bersten einer der Kondensatoren 6, 7,9 beziehungsweise 10 sicher verhindert ist.

## Patentansprüche

1. Frequenzumrichter zum Betreiben einer elektrischen Maschine, mit einem Gleichrichter (2), der Thyristoren (25, 26, 27) als Gleichrichterhalbleiter aufweist, und mit einem Wechselrichter (3), wobei der Gleichrichter (2) und der Wechselrichter (3) miteinander über einen Zwischenkreis (4) verschaltet sind, wobei der Zwischenkreis (4) zwei in Reihe geschaltete Zwischenkreiskondensatoreinheiten (5, 8) und je Zwischenkreiskondensatoreinheit (5, 8) einen hierzu parallel geschalteten Symmetriewiderstand (11, 12) zur Spannungssymmetrierung an den Zwischenkreiskondensatoreinheiten (5, 8) aufweist, sowie mit einer Vorladeschaltung (24) für den Zwischenkreis (4), die eine Diode (29) und einen hierzu in Reihe geschalteten Widerstand (30) aufweist, **dadurch gekennzeichnet, dass** je Zwischenkreiskondensatoreinheit (5, 8) eine Einheit (14, 15) zur Erfassung der an dieser Zwischenkreiskondensatoreinheit (5, 8) anliegenden Spannung vorgesehen ist, wobei die Einheit (14, 15) einen Optokoppler (16, 17) aufweist, der mit dem Symmetriewiderstand (11, 12) der zugehörigen Zwischenkreiskondensatoreinheit (5, 8) in Reihe geschaltet ist, dass eine Vergleichseinrichtung (31) vorgesehen ist, die die an den Zwischenkreiskondensatoreinheiten (5, 8) anliegenden Spannungen miteinander vergleicht und bei Spannungsasymmetrie ein entsprechendes Steuersignal (23) abgibt, wobei die Spannungsasymmetrie dadurch erkannt wird, dass ein dem jeweiligen Optokoppler (16, 17) zugeordneter Optokopplerausgang umschaltet und sich ein Spannungssignal an einem Eingang der Vergleichseinrichtung (31) ändert, und dass eine Abschaltvorrichtung (20) vorgesehen ist, die bei Detektion eines von der Vergleichseinrichtung (31) abgegebenen Steuersignals (23) den Stromfluss in den Zwischenkreis (4) unterbricht, wobei die Abschaltvorrichtung (20) den Gleichrichter (2), die Vorladeschaltung (24) für den Zwischenkreis (4) und eine Thyristorensteuerung (32) zur Deaktivierung eines die Thyristoren (25, 26, 27) des Gleichrichters (2) ansteuernden Signals aufweist, und wobei der Widerstand (30) der Vorladeschaltung (24) ein temperaturabhängiger Widerstand (30) ist.

2. Frequenzumrichter nach Anspruch 1, **dadurch gekennzeichnet, dass** die Vorladeschaltung (24) parallel zum Thyristor (25) an Phase L1 geschaltet ist.

3. Frequenzumrichter nach Anspruch 1 oder 2, **dadurch gekennzeichnet, dass** eine Zwischenkreiskondensatoreinheit (5, 8) mehrere in Reihe und/oder parallel geschaltete Kondensatoren (6, 7; 9, 10) aufweist.

4. Verfahren zum Stromlosschalten eines Zwischenkreises (4) eines Frequenzumrichters (1) nach einem der vorhergehenden Ansprüche 1 bis 3 im Kurzschlussfall einer von zwei in Reihe geschalteten Zwischenkreiskondensatoreinheiten (5, 8) des Zwischenkreises (4), bei dem eine Spannungssymmetrierung an den Zwischenkreiskondensatoreinheiten (5, 8) erfolgt, bei dem die an den Zwischenkreiskondensatoreinheiten (5, 8) jeweils anliegende Spannung mit Hilfe von Optokopplern (16, 17) erfasst wird, bei dem die an den Zwischenkreiskondensatoreinheiten (5, 8) anliegenden Spannungen miteinander verglichen werden, und bei dem im Falle des Vorliegens einer durch die Vergleichsprüfung erkannten Spannungsasymmetrie der Stromfluss in den Zwischenkreis (4) unterbrochen wird, wobei der Strom über Thyristoren eines Gleichrichters des Frequenzumrichters (1) in den Zwischenkreis (4) fließt und der Stromfluss in den Zwischenkreis (4) durch Sperrung der Thyristoren unterbrochen wird, wobei der Strom bei gesperrten Thyristoren über eine Vorladeschaltung (24) mit temperaturabhängigem Widerstand (30) in den Zwischenkreis (4) fließt und der Stromfluss in den Zwischenkreis (4) infolge des Hochohmigwerdens des temperaturabhängigen Widerstandes (30) unterbrochen wird.

5. Verfahren nach Anspruch 4, **dadurch gekennzeichnet, dass** die Reaktionszeit zwischen der Entstehung eines Kurzschlusses an einer der beiden Zwischenkreiskondensatoreinheiten (5, 8) und der Unterbindung eines Stromflusses in den Zwischenkreis (4) 3 ms bis 15 ms beträgt.

## Claims

1. Frequency converter for operating an electrical machine, having a rectifier (2) which has thyristors (25, 26, 27) as rectifier semiconductors, and having an inverter (3), the rectifier (2) and the inverter (3) being connected to one another via an intermediate circuit (4), the intermediate circuit (4) having two intermediate circuit capacitor units (5, 8) connected in series and for each intermediate circuit capacitor unit (5, 8) having a symmetry resistor (11, 12) connected in parallel therewith for voltage balancing at the intermediate circuit capacitor units (5, 8), and having a precharging circuit (24) for the intermediate circuit (4), which precharging circuit has a diode (29) and a resistor (30) connected in series with the diode (29), **characterized in that** for each intermediate circuit capacitor unit (5, 8) there is provided a unit (14, 15) for detecting the voltage applied to this intermediate circuit capacitor unit (5, 8), the unit (14, 15) having an optocoupler (16, 17) which is connected in series with the symmetry resistor (11, 12) of the associated intermediate circuit capacitor unit (5, 8), **in that** a comparison device (31) is provided which compares the voltages applied at the intermediate circuit capacitors (5, 8) with one another and outputs a corresponding control signal (23) in the event of voltage asymmetry, the voltage asymmetry being recognized **in that** an optocoupler output assigned to the respective optocoupler (16, 17) switches over and a voltage signal at an input of the comparison device (31) changes, and **in that** a switch-off device (20) is provided which interrupts the current flow into the intermediate circuit (4) when a control signal (23) emitted by the comparison device (31) is detected, the switch-off device (20) comprising the rectifier (2), the precharging circuit (24) for the intermediat circuit (4) and a thyristor controller (32) for deactivating a signal which controls the thyristors of the rectifier (2), and the resistor (30) of the precharging circuit (24) being a temperature-dependent resistor (30).

2. Frequency converter according to claim 1, **characterized in that** the precharging circuit (24) is connected in parallel to the thyristor (25) at phase L1.

3. Frequency converter according to claim 1 or 2, **characterized in that** an intermediate circuit capacitor unit (5, 8) has a plurality of capacitors (6, 7; 9, 10) connected in series and/or in parallel.

4. Method for de-energizing an intermediate circuit (4) of a frequency converter (1) according to one of the preceding claims 1 to 3 in the event of a short circuit of one of two series-connected intermediate circuit capacitors (5, 8) of the intermediate circuit (4), in which a voltage balancing takes place at the intermediate circuit capacitor units (5, 8), in which the voltage respectively present at the intermediate circuit capacitor units (5, 8) in each case is detected with the aid of optocouplers (16, 17), in which the voltage applied at the intermediate circuit capacitor units (5, 8) is detected with the aid of optocouplers (16, 17), in which the voltages applied at the intermediate circuit capacitor units (5, 8) are compared with one another and in which, in the case of the presence of a voltage asymmetry detected by the comparison, the current flow into the intermediate circuit (4) is interrupted, the current flowing into the intermediate circuit (4) via thyristors of a rectifier of the frequency converter (1) and the current flow into the intermediate circuit (4) being interrupted by blocking the thyristors, the current flowing into the intermediate circuit (4) via a precharging circuit (24) with a temperature-dependent resistor (30) when the thyristors are blocked, and the current flow into the intermediate circuit (4) being interrupted as a result of the temperature-dependent resistor (30) becoming highly resistive.

5. Method according to claim 4, **characterized in that** the reaction time between the occurrence of a short circuit at one of the two intermediate circuit capacitor units (5, 8) and the interruption of a current flow into the intermediate circuit (4) is 3 ms to 15 ms.

## Revendications

1. Convertisseur de fréquence pour le fonctionnement d'une machine électrique, comportant un redresseur (2) qui comporte des thyristors (25, 26, 27) en tant que redresseur semi-conducteurs et un onduleur (3), le redresseur (2) et l'onduleur (3) étant reliés l'un à l'autre par un circuit intermédiaire (4), le circuit intermédiaire (4) comportant deux unités de condensateur de circuit intermédiaire (5, 8) en série et comportant pour chaque unité de condensateur de circuit intermédiaire (5, 8) un résisteur de symétrie (11, 12) en parallèle avec celui-ci, pour rendre symétrique la tension au niveau des unités de condensateur de circuit intermédiaire (5, 8), et comportant un circuit de précharge (24) pour le circuit intermédiaire (4), lequel circuit de précharge comporte une diode (29) et un résisteur (30) reliées en série avec la diode (29), **caractérisé en ce qu'**il est prévu pour chaque unité de condensateur de circuit intermédiaire (5, 8) une unité (14, 15) pour détecter la tension appliquée à cette unité de condensateur de circuit intermédiaire (5, 8), l'unité (14, 15) comportant un optocoupleur (16, 17) qui est connecté en série avec le résisteur de symétrie (11, 12) de l'unité de condensateur de circuit intermédiaire (5, 8) associée, **en ce qu'**il est prévu un dispositif de comparaison (31) qui compare entre elles les tensions présentes aux unités de condensateur de circuit intermédiaire (5, 8) et émet un signal de commande (23) correspondant en cas d'asymétrie de tension, l'asymétrie de tension étant reconnue **en ce qu'**une sortie d'optocoupleur affectée à chaque optocoupleur (16, 17) commute et un signal de tension à une entrée du dispositif de comparaison (31) varie, et **en ce qu'**il est prévu un dispositif de coupure (20) qui interrompt le passage du courant dans le circuit intermédiaire (4) lorsqu'un signal de commande (23) émis par le dispositif de comparaison (31) est détecté, le dispositif de coupure (20) comportant le redresseur (2), le circuit de précharge (24) pour le circuit intermédiaire (4) et un dispositif de commande de thyristors (32) pour désactiver un signal qui commande les thyristors du redresseur (2), et le résisteur (30) du circuit de précharge (24) étant un résisteur dépendant de la température (30).

2. Convertisseur de fréquence selon la revendication 1, **caractérisé en ce que** le circuit de précharge (24) est connecté en parallèle au thyristor (25) au niveau de la phase L1.

3. Convertisseur de fréquence selon la revendication 1 ou 2, **caractérisé en ce qu'**une unité de condensateur de circuit intermédiaire (5, 8) comporte plusieurs condensateurs (6, 7; 9, 10) connectés en série et/ou en parallèle.

4. Procédé de mise hors tension d'un circuit intermédiaire (4) d'un convertisseur de fréquence (1) selon l'une des revendications 1 à 3 précédentes en cas de court-circuit d'une des deux unités de condensateur de circuit intermédiaire (5, 8) du circuit intermédiaire (4) connectées en série, dans lequel la tension au niveau des unités de condensateur de circuit intermédiaire (5, 8) est rendue symétrique, dans lequel la tension respectivement appliquée au niveau des unités de condensateur de circuit intermédiaire (5, 8) est détectée à l'aide d'optocoupleurs (16, 17), dans lequel les tensions appliquées au niveau des unités de condensateur de circuit intermédiaire (5, 8) sont comparées entre elles, et dans lequel en cas de présence d'une asymétrie de tension détectée par une comparaison, le courant dans le circuit intermédiaire (4) est interrompu, le courant circulant dans le circuit intermédiaire (4) via des thyristors d'un redresseur du convertisseur de fréquence (1) et le courant dans le circuit intermédiaire (4) étant interrompu par le blocage des thyristors, le courant circulant dans le circuit intermédiaire (4) via un circuit de précharge comportant un résisteur dépendant à la température et le courant dans le circuit intermédiaire étant interrompu en raison du résisteur (30) dépendant de la température devenant fortement ohmique.

5. Procédé selon la revendication 4, **caractérisé en ce que** le temps de réaction entre l'apparition d'un court-circuit au niveau de l'une des deux unités condensateurs de circuit intermédiaire (5, 8) et l'interruption d'un courant dans le circuit intermédiaire (4) est de 3 ms à 15 ms.
